# EUROPEAN PATENT APPLICATION

(11) **EP 2 108 822 A2**
(43) Date of publication of application: **14.10.2009**
(21) Application number: 08254037.8
(22) Date of filing: 17.12.2008
(51) Int. Cl.: F03D 3/04, F03D 3/06

(54) **Wind deflector for wind turbine and wind turbine incorporating same**

(30) Priority: 29.02.2008 HK 08102329; 18.07.2008 HK 08107997
(71) Applicant: Hopewell Wind Power Limited, Tortola (VI)
(72) Inventor: Wu, Gordon Ying Sheung, Hong Kong (CN); Wu, Thomas Jefferson, Hong Kong (CN); Wu, Carol, Hong Kong (CN)
(74) Representative: Martin, David John

(57) **Abstract**

A wind deflector for a wind turbine has a vertical wind deflecting surface movable in a circular path about the wind turbine for facing a prevailing wind direction.

## Description

### Background to the invention

### 1. Field of the Invention

The present invention relates to wind turbines and in particular to a wind deflector for use with a wind turbine.

### 2. Background Information

Vertical axis wind turbines are well known in the art. In a vertical axis wind turbine the main rotor shaft is arranged vertically and has radially extending arms supporting vertically arranged wind engaging blades. In a lift-type vertical axis wind turbine the blades have an aerofoil shape such that most of the rotating force comes from aerodynamic forces generated by wind passing across the aerofoils. Because the turbine rotates the aerofoils engage the wind from continuously varying directions throughout a circular path and each blade experiences both positive and negative wind power within each revolution. This may cause the turbine to be less efficient than it might be.

### Summary of the Invention

It is one object of the present invention to provide a wind deflector for a wind turbine that overcomes or at least ameliorates the above problem, or to at least provide the art with a useful alternative.

According to a first aspect of the invention there is provided a wind deflector for a wind turbine, the wind deflector comprising a vertical wind deflecting surface located on a guide track or carousel and movable in a circular path about the wind turbine.

Preferably, the wind deflecting surface has a circumferential span of less than 30 degrees of the circular path.

Preferably, the wind deflecting surface has a circumferential span of between 5 and 30 degrees of the circular path.

Preferably, wherein the wind deflecting surface is curved in a horizontal direction.

Preferably, the wind deflector further comprises a control means for moving the wind deflecting surface to a position leading a prevailing wind direction by 30 degrees to.

According to a second aspect of the invention there is provided herein a wind turbine comprising a stationary core, a rotor rotatably supported about the core and having a plurality of radially extending rotor arms each bearing a rotor blade, and the wind deflector of claim 1.

Preferably, the circular path is about the outer periphery of the rotor.

Preferably, the wind deflecting surface has a circumferential span of less than 30 degrees of the circular path.

Preferably, the wind deflecting surface has a horizontal span of between 5 and 30 degrees of the circular path.

Preferably, the wind deflecting surface has a vertical height longer than that of the rotor blade.

Preferably, the wind deflecting surface is straight or curved in a horizontal direction.

Preferably, the wind deflecting surface leads 30 degrees to the prevailing wind direction.

According to a third aspect of the invention there is provided herein a method of operating a vertical axis wind turbine comprising providing a vertical wind deflecting surface on a circular guide track or carousel having a circular path about the turbine rotor and moving the wind deflecting surface about the circular path to face a prevailing wind direction.

Preferably, the wind deflecting surface is moved about the circular path to lead 30 degrees to the prevailing wind direction.

Further aspects of the invention will become apparent from the following description, which is given by way of example only and is not intended to limit the scope of use or functionality of the invention.

### Brief Description of the Drawings

An exemplary form of the present invention will now be described by way of example only and with reference to the accompanying drawings, in which:
Figure 1 is a perspective illustration of a vertical axis wind turbine with a wind deflector,

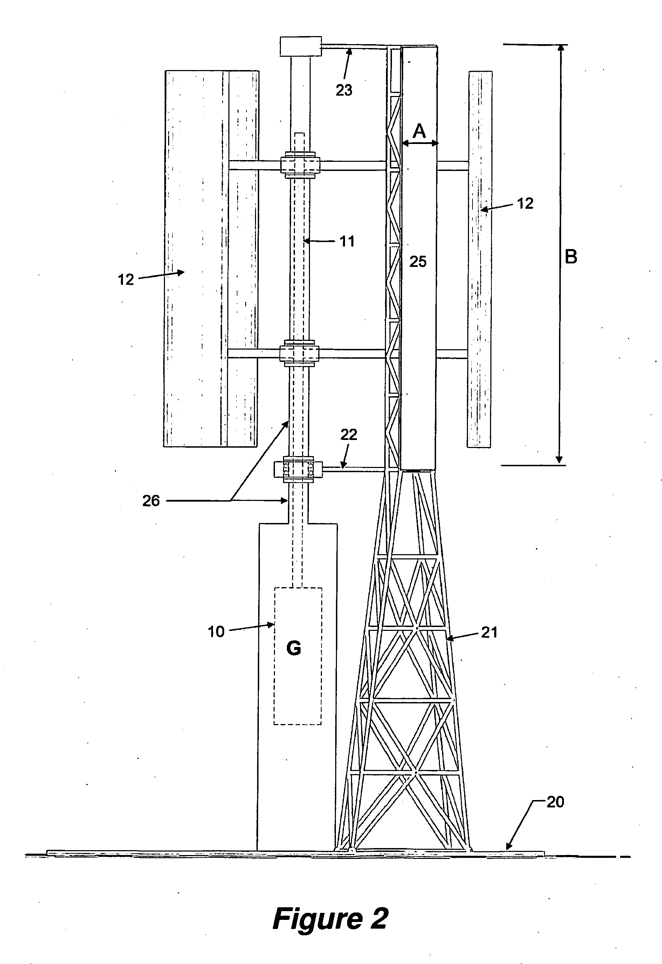

Figure 2 is an elevation illustration of the wind turbine with a wind deflector, viewing from the prevailing wind direction when the turbine is turning clockwise,

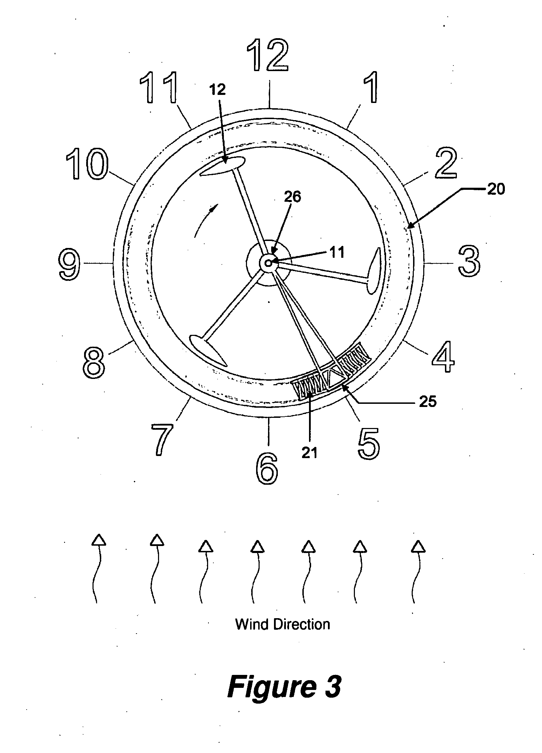

Figure 3 is a plan illustration of the wind turbine with wind deflector, and
Figure 4 is a perspective illustration of a second type of vertical axis wind turbine with which the wind deflector could be used.

### Description of the Exemplary Embodiments

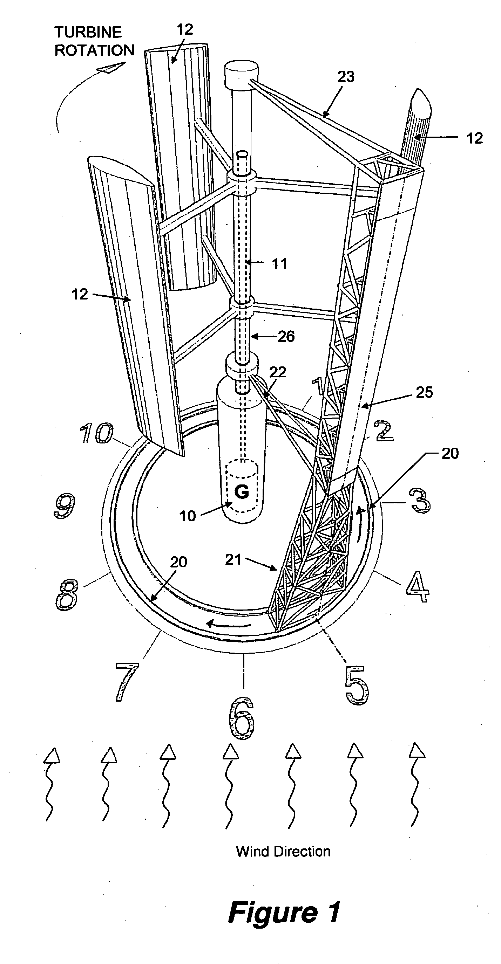

In figure 1 there is depicted a perspective illustration of a wind turbine with a wind deflector according to the invention. The scale of the wind turbine is not critical to the invention and it may be of any size from a small roof top wind turbine up to a large turbine having, for example, a diameter of 300 metres and a height of up to 500 metres. A wind turbine of this size has been proposed by the applicant in earlier patent applications.

The wind turbine of figure 1 comprises a base housing an electricity generator 10. A stationary turbine support frame 26 extends vertically from the base and encloses a vertical rotary shaft 11 coupled to the generator. The shaft 11 is connected to three radial blade structures each supporting lift-type aerofoil shaped blades 12. The blades 12 are arranged 120 degrees apart about the rotary shaft 11. The blades 12 are acted upon by wind causing the rotary shaft 11 to rotate for generating electricity as is known in the art.

The wind turbine has about its base a guide track 20 that defines a circular path about the circumferential path taken by the rotating blades 12. A moveable frame 21 is located to travel on the circular track 20 and extends vertically to a height above the top of blades 12. Two radially extending arms 22, 23 between the frame 21 and the turbine support frame 26 support the frame 21 at its top and an intermediate position. The two radial arms 22, 23 are vertically located at positions below and above the rotor blades 12 respectively. The frame 21 mounted on wheels or rollers (not shown) that allow it to freely travel along the circular track 20 and thus move about the perimeter of the wind turbine. A motorized drive system is provided at the frame base for moving the frame 21 along the circular track 20. Located on an outer face of the frame 21 is a vertical wind deflecting surface 25. The wind deflecting surface 25 has a width that spans approximately 10 degrees of the circular part circumference, and a vertical height B longer than the vertical length of the rotor blades 12. The wind deflecting surface 25 is located on the frame such that its entire length B extends through the entire vertical height of the rotor blades 12. The wind deflecting surface 25 is straight in the horizontal direction. In an alternative embodiment the wind deflecting surface 25 is curved in the horizontal direction.

Control means for the wind deflector include a wind direction sensor and deflector position control circuitry. In use, the direction of the prevailing wind acting on the wind turbine is determined and the position control means drives the frame 21 to a position such that the wind deflecting surface 25 is 30 degrees to the prevailing wind direction. In the drawings the circular track 20 is provided with position numbers 1 through 12 like the face of a clock. These numbers are for illustrative purposes only. They do not form part of the physical device and are not intended to limit the scope of use or functionality of the invention. As indicated on Figure 1, in the illustrative embodiment the aerofoil shape of the turbines blades 12 is such that the turbine rotates in the clock-wise direction. The prevailing wind direction in the illustrated embodiment is from the 6 o'clock position. Maximum efficiency and speed of rotation of the rotor is achieved if the wind deflecting surface 25 is located at a position that leads the prevailing wind direction by about 30 degrees. In the illustrated embodiment 30 degrees leading the wind direction is 5 o'clock. The term leading refers to the fact that the rotor blades 12 passed behind the wind deflecting surface 25 30-degrees before they reach a position perpendicular to the prevailing wind direction.

Positioning a wind deflecting surface 25 having even a small circumferential span of 10 degrees at a position 30 degrees leading the prevailing wind direction substantially improves the speed and efficiency of rotation of the wind turbine for a given wind strength. The wind deflecting surface 25 causes the turbine to start rotation at a lower wind speed and to rotate at a faster speed for any given wind strength than when the wind deflecting surface 25 is absent. The optimum position for the wind deflecting surface 25 may varying from exactly 30 degrees depending on the dimensions of the wind deflecting surface and the type and size of the wind turbine rotor blades.

It should be appreciated that modifications and alterations obvious to those skilled in the art are not beyond the scope of the present invention. For example, in the preferred embodiment the horizontal span of the wind deflecting surface 25 is 10 degrees. However this is not essential to the invention and the span may be anywhere less than 30 degrees. Further, the inventors currently believe that the most effective position for the wind deflecting surface 25 is 30 degrees leading the prevailing wind direction. However, this is not essential to the invention and positions other than 30 degrees may provide acceptable results. Furthermore, it is anticipated that the most efficient position of the wind deflecting surface 25 might be related to the surface span. For example, if the span is increased from 10 degrees to, say, 30 degrees then the optimal position to the prevailing wind direction may vary from the preferred 30 degrees direction.

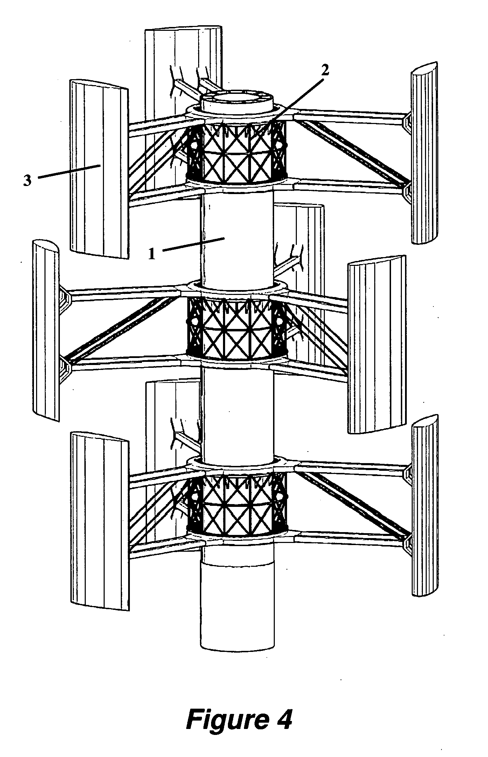

Figure 4 depicts a large scale multi-stage wind turbine proposed by the applicant in earlier patent applications. The wind turbine depicted in Figure 4 has three independently rotatable turbine stages stack one above the other. This wind turbine may extend to a height of 300-500 meters. The wind experienced by different stages through the height of such a high wind turbine may vary slightly due to the effects of terrain. It is therefore desirable to have wind deflecting surfaces at each stage of the turbine that can be forced in slightly different directions to take account of slightly varying wind directions at different levels. In such an embodiment a carousel erected around the outer periphery of the wind turbine could carry a separate independently rotatable wind deflecting surface for each vertical stage of the wind turbine. The carousel would be made from tubular frame members so is not to unduly affect wind acting upon the wind turbine except in the area of the wind deflecting surface.

## Claims

1. A wind deflector for a wind turbine, the wind deflector comprising a vertical wind deflecting surface located on a guide track or carousel and movable in a circular path about the wind turbine.

2. The wind deflector of claim 1 wherein the wind deflecting surface has a circumferential span of less than 30 degrees of the circular path.

3. The wind deflector of claim 1 or 2 wherein the wind deflecting surface has a circumferential span of between 5 and 30 degrees of the circular path.

4. The wind deflector of any preceding claim wherein the wind deflecting surface is curved in a horizontal direction.

5. The wind deflector of any preceding claim further comprising a control means for moving the wind deflecting surface to a position leading a prevailing wind direction by 30 degrees to.

6. A wind turbine comprising:
a stationary core,
a rotor rotatably supported about the core and having a plurality of radially extending rotor arms each bearing a rotor blade, and
the wind deflector of claim 1.

7. The wind turbine of claim 6 wherein the circular path is about the outer periphery of the rotor.

8. The wind turbine of claim 6 or 7 wherein the wind deflecting surface has a circumferential span of less than 30 degrees of the circular path.

9. The wind turbine of any preceding claim wherein the wind deflecting surface has a horizontal span of between 5 and 30 degrees of the circular path.

10. The wind turbine of any preceding claim wherein the wind deflecting surface has a vertical height longer than that of the rotor blade.

11. The wind turbine of any preceding claim wherein the wind deflecting surface is straight or curved in a horizontal direction.

12. The wind turbine of any preceding claim wherein the wind deflecting surface leads 30 degrees to the prevailing wind direction.

13. A method of operating a vertical axis wind turbine comprising providing a vertical wind deflecting surface on a circular guide track or carousel having a circular path about the turbine rotor and moving the wind deflecting surface about the circular path to face a prevailing wind direction.

14. The method of claim 13 wherein the wind deflecting surface is moved about the circular path to lead 30 degrees to the prevailing wind direction.

15. A wind deflector for a wind turbine as herein described with reference to any one of the drawings.

16. A wind turbine as herein described with reference to any one of the drawings.
